# EUROPEAN PATENT APPLICATION

(11) **EP 2 381 644 A1**
(43) Date of publication of application: **26.10.2011**
(21) Application number: 10382291.2
(22) Date of filing: 05.11.2010
(51) Int. Cl.: H04L 29/08

(54) **Real-time location method at area level of radio frequency-transmitting portable devices**

(30) Priority: 22.04.2010 ES 201030585
(71) Applicant: Soluciones Tecnologicas para la Salud y El Bienestar, S.A., 46980 Paterna Valencia (ES)
(72) Inventor: Monton Sanchez. Eduardo, 46980 Paterna (Valencia) (ES); Blasco Buch, José Manuel, 46980 Paterna (Valencia) (ES); Hernandez Cuartero, José Francisco, 46980 Paterna (Valencia) (ES); Pérez Rodriguez, Francisco, 46980 Paterna (Valencia) (ES); Guillén Barrionuevo, Sergio Gustavo, 46980 Paterna (Valencia) (ES)
(74) Representative: Díaz de Bustamante y Terminel, Isidro

(57) **Abstract**

REAL-TIME LOCATION METHOD AT AREA LEVEL OF RADIO FREQUENCY-TRANSMITTING PORTABLE DEVICES, through bracelets provided with a RF transmitter, comprising a network of fixed radio frequency receivers (2), allowing the core system (3) the reception of the signals; it contemplates the utilization of other nodes (4) of the network, using the adaptation of IP addresses to radio frequency frames and the association of devices for creating radio frequency networks on TCP/IP networks. With the power received in the fixed receivers (2) it defines, through an algorithm, the distance between receiver and transmitter, and the area in which the transmitter is present. In order to optimize the transmission of information, it utilizes a 16 or 24 bits network identifier achievable by any other receiver in the TCP/IP network.

## Description

### OBJECT OF THE INVENTION

The invention, as exposed on the wording of the present specification, relates to an area level real-time method for location of radio frequency-transmitting portable devices, providing the function to which it is intended remarkable advantages and novelty characteristics, opposite to other systems currently known in the market for the same purpose.

More particularly, the object of the invention focuses on a method for location of radio frequency-transmitting portable devices, being said location capability carried out at area level and in real time, for the identification, control and safety of portable devices in predefined areas, being that method of the type applicable for locating individuals or assets and monitoring their location and traceability in determined areas previously defined and through the utilization of identification bracelets. It is based on a system of radio frequency receivers installed, being eminently applicable for hospital environments, retirement homes and in general enclosed buildings or environments.

The method makes use basically of a system of fixed radio frequency receivers installed in the predefined areas and is intended for the location of a plurality of radio frequency-transmitting devices, preferably composed of some bracelets, worn by each one of the designated individuals, or pendants which are associated to the equipments to be monitored, and is intended to set itself up as a system for the location and traceability of the designated individuals or equipments, allowing the person in charge of the system to have in every moment under control each and everyone of the designated individuals and equipments wearing said radio frequency device, both in a global way and individually, allowing him, moreover, among other advantages, to get access to additional information about different aspects of each one.

Furthermore, the method for location of radio frequency-transmitting portable devices utilizes the adaptation of IP addresses to radio frequency frames and the association of devices for creating radio frequency networks on TCP/IP networks. This mechanism utilizes a 16 or 24 bits network identifier achievable by any other device through a TCP/IP network and thus being able to transmit the frames by a means different to radio frequency, optimizing the information transmission from the radio frequency transmitters to the core system. Thus, it is allowed that the information is available in time so that the system uses the proposed location method and possess all the information in real time for a correct location.

### APPLICATION FIELD OF THE INVENTION

The application field of the present invention is framed within the technical sector of the radio frequency location technologies, applied to the safety of groups of people and equipments in predefined environments.

### BACKGROUND OF THE INVENTION

As it is known, RFID (acronym for *Radio Frequency Identification*) is a system for remotely storing and retrieving data which uses devices called RFID labels, transponders or tags. The main purpose of RFID technology is transmitting the identity of an object (similar to a unique serial number) through radio frequency waves. The RFID technologies are grouped within the so called Auto ID (Automatic Identification).

A RFID label is a small device, similar to a sticker, which can be adhered or incorporated to a product, animal or person. They contain antennas so that they can receive and answer to radio frequency requests from an RFID transmitter-receiver, usually called RFID readers. The passive labels need no inner electric supply, whereas the active one do require, usually utilizing a battery to this end. One of the advantages of using radio frequency (instead, for example, of the infrared technology) is that no direct sight between transmitter and receiver is required.

On this technology are appearing systems that allow, detecting the transit of people (passive RFID), or locating people in an area (active RFID), providing more complete solutions of traceability and safety.

In the state of the art we find:
- Systems for tracking people with fixed infrastructures and based on active RFID: Utility Model ES 1064033 U, Patent ES 2303465. They are composed mainly of an infrastructure of readers and antennas placed in the transit zone of people, which carry an active RFID card which is identified when the person passes through the zone provided with antennas. They allow for a certain distance (typically of a few meters) between tag and antenna for a correct identification.
- Systems based on the identification of objects using portable readers: patent PI 0700437, ES 2159502. It is composed of a portable device acting as a RFID reader which allows, in a greater (active RFID) or lower (passive RFID) distance, the control mainly of objects.
- Systems based on the detection of the separation of objects: patent PI 0700437. Systems detecting the separation of an object from a core reader.
- Systems for the safety of objects: patent ES 2280888. Systems based on RFID in order to keep objects from being theft.

Therefore, the RFID technology is differently combined in order to offer different solutions:
- Infrastructure of antennas and fixed readers for the identification of the passage of passive (with an action by the user) or active RFID tags (for the automatic detection of the passage of people and objects). It allows for the traceability and/or location of people and objects.
- Utilization of portable RFID readers, used mainly by individuals, for the identification of people and objects using mainly passive RFID tags and through the approach of the RFID reader.
- Use of fixed and portable RFID readers in order to detect the separation of active RFID tags, in order to provide safety against thefts.

The combination and the different use of the RFID technology offers varied solutions for problems of identification, traceability, location, control, safety, etc., of objects and people, however, no document or patent is found in the current state of the art which, as the invention herein recommended does, offers a solution for the following generic situation:

In the method proposed here, location and traceability of individuals or equipments, which wear a radio frequency-transmitting portable device, is made through a fixed network of antennas placed in the different predefined areas. Traditional systems are based on the relationship between the increase of the received power with a greater proximity to the corresponding beacon. In the presented method, the received power joined with the predefined areas defines the maximum distance between the device and the installed antennas. Based on that information, and taking into account the environment conditions, algorithm calculations and predefined areas specified, an area in which is assured the presence of the device is enclosed.

Mention must be made that the applicant itself is owner of a patent relating to a system of the type herein concerned, wherein un electronic equipment for the identification, control and safety of groups of individuals in mobility is described, equipment which, nevertheless, presents determined aspects which are improvable, being this, one of the main objectives of the herein recommended method.

Thus, the objectives of the present invention are:
- The location in predefined areas of the individuals or equipments defined by the core system.
- Control of individualized presence of the different individuals and equipments in the predefined areas.
- Real-time monitoring of the occupation degree of each predefined area
- Knowing the number of individuals and devices as well as their identities in each area at real time.
- Establish individually or collectively the paths and times employed in the movements between the different predefined areas.

Traditional systems are based on the relantionship between the increase of the received power with a greater proximity to the corresponding beacon. In the presented method, the received power joined with the predefined areas defines the maximum distance between the device and the installed antennas. Based on that information, and taking into account the environment conditions, algorithm calculations and predefined areas specified, an area in which is assured the presence of the device is enclosed. Thus, the monitoring of a greater number and size of areas with a lower number of fixed receivers is allowed.

In other methods the use of location indoor and in predefined areas of individuals or devices is defined based on positioning algorithms x and y, needing the installation of lots of receivers in order to be reliable and precise. In the disclosed method, by using the concept relating to the maximum distance, and combining it with the utilization of the previous definitions of the monitored areas, the number of necessary fixed receivers decreases considerably, besides of obtaining a great precision at area level.

As they are usually indoor places, buildings or places with multiple areas, they are systems with numerous receivers and transmitters operating at the same time and at different distances. Further, the information to be used by the core system in order to calculate the correct location must arrive in time and from very varied locations and distances in a synchronized way. In order to achieve an optimal transmission of the information we have proceed to a method for the adaptation of IP addresses to frames transmitted by Radio Frequency utilizing the IEEE 802.15.4 protocol and the association of devices creating radio frequency networks on TCP/IP networks.

Thus, by the applicant, it is unknown the existence of any other invention presenting technical, structural and constitutive characteristics similar to the ones presented by the method for location of radio frequency-transmitting portable devices herein recommended, whose characterizing details are suitably included in the final claims accompanying the present specification.

### EXPLANATION OF THE INVENTION

Thus, and as it has been pointed previously, the invention recommends a method for location of radio frequency-transmitting portable devices at area level based on a system of radio frequency receivers installed in a fixed way, which constitutes a tool for the location and traceability of a group of individuals or equipments in a continuous and autonomous way, allowing a person to have in every moment under control each and everyone of the designated individuals or equipments.

The method is intended to be applied in the location and traceability of individuals and equipments in hospital environments, retirement homes, buildings, etc., besides of having a database of interest of each individual or equipment.

To this end, the method utilizes a novel concept in which, by a pre-established algorithm, the received power defines the maximum of distance between the device and the beacon. Based on that information and taking into account the environment conditions, an area in which is assured the presence of the radio frequency-transmitting portable device, is enclosed.

Furthermore, the method is applied by a system of fixed radio frequency receivers, installed in the different predefined areas, and portable radio frequency transmitters, usually bracelets. Said transmitters transmit a periodic signal which is received by different receivers within the system and based on the concept applied on the maximum distances and the predefinition of areas allows for the location of the radio frequency transmitter.

Thus, for example, in a possible use of the method in a hospital, the system would operate automatically through the utilization of a network of fixed beacons (radio frequency receivers) installed in the different areas to be monitored and the bracelet worn by patients, allowing for the instant location and automatic traceability in every moment. The whole system would be centralized in a server, to which one can access for managing the information in real time of each patient in an easy and simple way. Moreover, each bracelet is assigned to an individual patient, allowing access to his information.

Thanks to the continuous reception of the signal transmitted by the bracelets, the system manager in the hospital gets access to different functionalities:
- Clinical safety through the safe identification of the patient at the entrance of the area or through reading by approach of the devices.
- Effective and automated traceability of patients' paths and activity, besides of the use and occupation of the predefined areas

- Hospital and real-time location of people and assets allowing for grant information both to professionals and relatives
- Management of physical safety avoiding possible accessions to restricted areas by the patients and possible escapes and thefts, or by the real-time location of the patients and the detection of possible anomalous situations of patients in inappropriate areas or times.

Besides of the described functionalities, it is contemplated a PC application allowing the management of individuals, of areas, and the assignment of bracelets, as well as the possibility of managing information of the professionals, permissions for accessing to the information, besides of granting access to all the functionalities previously described.

The area level and real-time method for location of radio frequency-transmitting portable devices described represents consequently an innovative structure with structural and constitutive characteristics not known so far for such purpose, reasons which, together with its practical usefulness, grant enough basis to obtain the exclusiveness privilege applied for.

### DESCRIPTION OF THE DRAWINGS

In order to complete this description and to ease a better understanding of the characteristics of the invention, we attach to the present specification, making part of the same, a set of layouts where, with an illustrative non limitative character, the following has been represented:
Figure number 1.- Shows a schematic representation of an example of the elements involved in the area level and real-time method for location of radio frequency-transmitting portable devices, object of the invention.

### PREFERENTIAL EMBODIMENT OF THE INVENTION

In the light of the said figure, and according to its numbering, it can be seen that the basic elements involved in the application of the recommended method are the following:

A plurality of bracelets (1) each one with a radio frequency transmitter, which transmit the location signal, received by the receivers of a network of fixed installed radio frequency receivers (2) in the areas to be controlled, and a PC core system (3) where all the received radio frequency signals are received, by applying the method described for location and traceability.

The antenna is, for example, a microstrip antenna adapted by a commercial balun.

The whole device with a radio frequency portable transmitter is powered through a battery holder for a watch battery.

Each bracelet (1) transmits an identification frame, containing the information of the IEEE address (a 64-bits OUI) of the radio frequency transceiver chip and the value of the battery, which remains between frame and frame in power-saving mode.

To this end the firmware of the bracelet is composed of four differenced blocks:
- Radio frequency control block which deals with the transmission of the IEEE 802.15.4 frames.
- Location frames timing block, which deals with the randomization of the time between frames in order to avoid collisions and builds the location frame to be transmitted. It also includes the data about the battery level in the frame.
- Button control block, which executes the interrupt attention routine when the button in the bracelet is pressed.
- The battery control block, which monitors the level of the battery and determines if said value is above the minimum value for the operation of the bracelet.

The network (2) of fixed radio frequency receivers are installed in the different predefined areas (called beacons), and is intended to be able to locate in certain defined areas where every bracelet is in every moment, each beacon being composed of a PCE as support, plus the additional components needed for its operation: *System on Chip* including radio frequency microcontroller and transceiver (for example CC2430 from Texas Instruments) or transceiver and microcontroller separately (for example CC2520 + MSP430, also from Texas Instruments), two crystals for the watches, decoupling capacitators, pull-up resistors, adaptation for the RF port, power supply, and antenna.

For its part, the PC core system (3) is a personal computer or server where the system management software and the implementation software of the described method, called location motor, are installed, for which it is provided with an application where we could manage all the system's devices and users, as well as with a data warehouse which would include the application data.

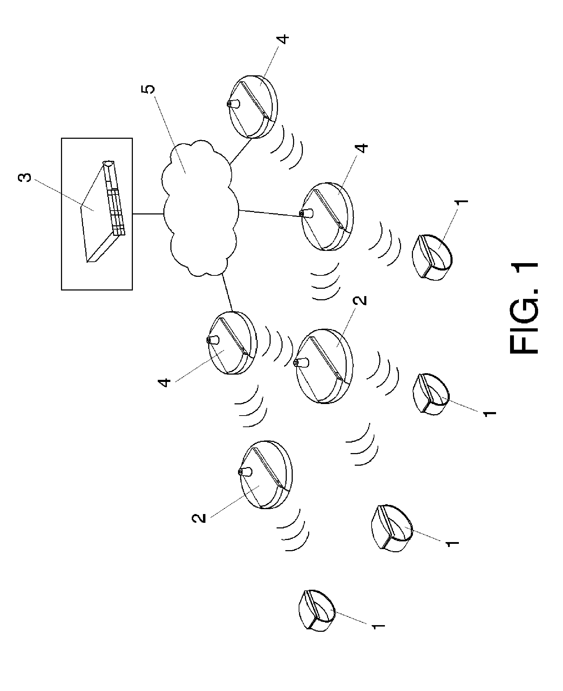

Finally, other nodes (4) of the network allow for the information received in the radio frequency receivers to reach optimally the core system (3), being schematically represented in figure 1 united to the local area network (LAN) referenced as (5).

Briefly, recommended method for location of radio frequency-transmitting portable devices, at area levels and in real time, is applicable for locating individuals and monitoring their location and traceability in determined areas previously defined, by the utilization of identification bracelets provided with an RF transmitter for the periodic transmission of identification signals to a core system (3), being characterized in that it comprises the installation of a network of fixed radio frequency receivers (2), intended to allow the core system (3) the reception of the radio frequency signals transmitted by the identification bracelets. Said core System (3) is qualified for the treatment of data contained in said signal and locating each bracelet in a predefined area. Furthermore, the method proposed is characterized in that it contemplates the utilization of other nodes of the network (4) so that the information received in the fixed radio frequency receivers (2) reaches optimally the core system (3), using the adaptation of IP addresses to radio frequency frames and the association of devices for creating radio frequency networks on TCP/IP networks.

The proposed method utilizes the power received in the fixed receivers (2) in order to define the maximum of distance between the receiver and the transmitter and, based on that information and taking into account the environment conditions, an area in which is assured the presence of the radio frequency-transmitting device is defined, allowing for the monitoring of a greater number and size of areas with a lower number of fixed receivers.

Finally it is worth noting that it optimizes the transmission of the information using a 16 or 24 bits network identifier achievable by any other receiver in the TCP/IP network by a mechanism of adaptation of IP addresses to frames transmitted by Radio Frequency using IEEE 802.15.4 protocol and the association of novel devices creating radio frequency networks on TCP/IP networks.

Being sufficiently described the nature of the present invention, as well as the way to put it into practice, it is not considered necessary to make an extensive description for an expert in the art understands its reach and the derived advantages, stating that, within its essentiality, it might be put in practice in other ways differing in detail from such indicated by way of example, to which the protection requested will also reach, provided that its main principle is not altered, changed or modified.

## Claims

1. REAL-TIME LOCATION METHOD AT AREA LEVEL OF RADIO FREQUENCY-TRANSMITTING PORTABLE DEVICES, of the type applicable for locating individuals and assets, monitoring their location and traceability in determined areas previously defined and through the utilization of identification bracelets provided with an RF transmitter for the periodical transmission of identification signals to a core system (3), **characterized in that** it comprises the installation of a fixed network of radio frequency receivers (2), intended for allowing the core system (3) the reception of the radio frequency signals transmitted by the identification bracelets, being said core system (3) qualified for the treatment of data contained in said signal and locating each bracelet in a predefined area; and **in that** it contemplates the utilization of other nodes (4) of the network so that the information received in the fixed radio frequency receivers (2) reaches optimally the core system (3), using the adaptation of IP addresses to radio frequency frames and the association of devices for creating radio frequency networks on TCP/IP networks.

2. REAL-TIME LOCATION METHOD AT AREA LEVEL OF RADIO FREQUENCY-TRANSMITTING PORTABLE DEVICES, according to claim 1, **characterized in that** it contemplates the utilization of power received in the fixed receivers (2) in order to define, by a pre-established algorithm, the maximum of distance between the receiver and the transmitter, and based on that information and taking into account the environment conditions and predefined areas, defines an area in which is assured the presence of the radio frequency-transmitting portable device.

3. REAL-TIME LOCATION METHOD AT AREA LEVEL OF RADIO FREQUENCY-TRANSMITTING PORTABLE DEVICES, according to claims 1 and 2, **characterized in that**, in order to optimize the transmission of the information, it contemplates the utilization of a 16 or 24 bits network identifier achievable by any other receiver in the TCP/IP network by a mechanism of adaptation of IP addresses to frames transmitted by Radio Frequency using IEEE 802.15.4 protocol and the association of novel devices creating radio frequency networks on TCP/IP networks.
